# EUROPEAN PATENT APPLICATION

(11) **EP 2 743 877 A1**
(43) Date of publication of application: **18.06.2014**
(21) Application number: 13191256.0
(22) Date of filing: 01.11.2013
(51) Int. Cl.: G06Q 30/02

(54) **Method and apparatus to provide advertisement data based on device information and operational information of apparatuses**

(30) Priority: 17.12.2012 KR 20120147719
(71) Applicant: Samsung Electronics Co., Ltd, Gyeonggi-do 443-742 (KR)
(72) Inventor: Shim, Jung-hyun, Gyeonggi-do (KR); Lee, Kang-min, Gyeonggi-do (KR); Jin, Sun-mi, Seoul (KR); Kweon, Ji-hyeon, Gyeonggi-do (KR)
(74) Representative: Gover, Richard Paul

(57) **Abstract**

A method provides advertisement data including obtaining device information and operational information from one or more user apparatuses, transmitting the obtained device information and the obtained operational information to an advertisement data providing server, receiving advertisement data selected by the advertisement providing server on a basis of the obtained device information and the obtained operational information transmitted to advertisement providing server, and transmitting the received advertisement data to an advertisement data display device, wherein the obtained operational information is information on a use pattern of the one or more user apparatuses.

## Description

### CROSS-REFERENCE TO RELATED APPLICATIONS

This application claims priority under 35 U.S.C. § 119(a) from Korean Patent Application No. 10-2012-0147719, filed on December 17, 2012, in the Korean Intellectual Property Office, the disclosure of which is incorporated herein in its entirety by reference.

### BACKGROUND OF THE INVENTION

### 1. Field of the Invention

The present invention relates to a method and apparatus to provide advertisement data selected on a basis of device information and operational information that are obtained by one or more apparatuses.

### 2. Description of the Related Art

Although different types of apparatuses are implemented according to users, portions of advertisement data to be provided to the users are similar or the same. Accordingly, users often see advertisement data that is not applicable to them. If non-applicable advertisement data is provided to users who are randomly selected regardless of their characteristics, advertising effects are decreased. Thus, there is a need to collect portions of information according to users and to provide customized advertisement data to those users depending on the collected information.

### SUMMARY OF THE INVENTION

The present general inventive concept provides a method and apparatus to provide advertisement data selected on a basis of device information and operational information that are obtained by one or more user apparatuses.

Additional features and utilities of the present general inventive concept will be set forth in part in the description which follows and, in part, will be obvious from the description, or may be learned by practice of the general inventive concept.

Exemplary embodiments of the present general inventive concept provide a method that provides advertisement data by using an advertisement data providing apparatus, the method including obtaining device information and operational information from one or more user apparatuses, transmitting the obtained device information and the obtained operational information to an advertisement data providing server, receiving advertisement data selected by the advertisement providing server on a basis of the obtained device information and the obtained operational information transmitted to the advertisement providing server, and transmitting the received advertisement data to an advertisement data display device, wherein the obtained operational information is information on a use pattern of the one or more user apparatuses.

The obtained operational information may include at least one of a number of operations of the one or more user apparatuses and a number of times that a function of the one or more user apparatuses is executed according to functions comprised in the one or more user apparatuses.

The obtained device information may include information on a type of user apparatus, and the received advertisement data may include advertisement data regarding, of the one or more user apparatuses, a user apparatus that is of a type not involved in the obtained device information and selected based on information on the type of user apparatus.

The obtained device information may include information on a manufacture date or a release date of the one or more user apparatuses, and the receiving of the advertisement data may include receiving advertisement data selected by the advertisement providing server based on the information on the manufacture date or the release date of the one or more user apparatuses.

The receiving of the advertisement data may include receiving advertisement data regarding a user apparatus that is associated with a type of the one or more user apparatuses.

Exemplary embodiments of the present general inventive concept provide a method of selecting advertisement data by using an advertisement data selecting apparatus, the method including obtaining device information and operational information from one or more user apparatuses, selecting advertisement data based on the obtained device information and the obtained operational information, and transmitting the selected advertisement data to an advertisement data providing apparatus or an advertisement data display device, wherein the operational information is information on a use pattern of the one or more user apparatuses.

The obtained operational information may include at least one of a number of operations of the one or more user apparatuses and a number of times that a function of the one or more user apparatuses is executed according to functions comprised in the one or more user apparatuses.

The obtained device information may include information on the type of user apparatus, and the selecting of the advertisement data may include selecting advertisement data regarding, of the one or more user apparatuses, a user apparatus that is of a type not involved in the obtained device information based on the information on the type of user apparatus.

The obtained device information may include information on a manufacture date or a release date of the one or more user apparatuses, and the selecting of the advertisement data may include selecting advertisement data based on the information on a manufacture date or a release date of the one or more user apparatuses.

The selecting of the advertisement data may include selecting advertisement data regarding a user apparatus that is associated with a type of the one or more user apparatuses.

Exemplary embodiments of the present general inventive concept may also provide a method of providing advertisement data by using an advertisement data providing apparatus where the method includes obtaining device and use pattern (operational) information from one or more user apparatuses, transmitting the obtained device and use pattern information to an advertisement data providing server, receiving advertisement data selected by the advertisement providing server on a basis of the obtained device and use pattern information transmitted to the advertisement providing server, and transmitting the received advertisement data to an advertisement data display device. The use pattern information may include at least one of a use frequency of a user apparatus of the one or more user apparatuses and a use time of the user apparatus.

The method may include use pattern information that includes at least one of a use frequency of a user apparatus of the one or more user apparatuses and a use time of the user apparatus.

Exemplary embodiments of the present general inventive concept may also provide a method of selecting advertisement data by using an advertisement data selecting apparatus where the method may include obtaining device and use pattern (operational) information from one or more user apparatuses, selecting advertisement data based on the obtained device and use pattern information, and transmitting the selected advertisement data to an advertisement data providing apparatus or an advertisement data display device. The use pattern information may include at least one of a use frequency of a user apparatus of the one or more user apparatuses and a use time of the user apparatus.

The method may include use pattern information that includes at least one of a use frequency of a user apparatus of the one or more user apparatuses and a use time of the user apparatus.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIG. 1 is a block diagram of a system to provide advertisement data according to an embodiment of the present general inventive concept;

FIG. 2 is a flowchart illustrating operations of a method of providing advertisement data by using an advertisement data providing apparatus according to an embodiment of the present general inventive concept;

FIG. 3 is a flowchart illustrating operations of a method of selecting and transmitting advertisement data by using an advertisement data providing server according to an embodiment of the present general inventive concept;

FIG. 4 is a flowchart illustrating operations of a first method of selecting advertisement data by using an advertisement data providing server according to an embodiment of the present general inventive concept;

FIG. 5 is a flowchart illustrating operations of a second method of selecting advertisement data by using an advertisement data providing server according to an embodiment of the present general inventive concept;

FIG. 6 is a flowchart illustrating operations of a third method of selecting advertisement data by using an advertisement data providing server according to an embodiment of the present general inventive concept;

FIG. 7 is a flowchart illustrating operations of a fourth method of selecting advertisement data by using an advertisement data providing server according to an embodiment of the present general inventive concept;

FIG. 8 is a flowchart illustrating operations of a fifth method of selecting advertisement data by using an advertisement data providing server according to an embodiment of the present general inventive concept;

FIG. 9 is a flowchart illustrating operations of a method of selecting and providing advertisement data according to an embodiment of the present general inventive concept;

FIG. 10 is a flowchart illustrating operations of a method of selecting and providing advertisement data according to another embodiment of the present general inventive concept;

FIG. 11 is a block diagram illustrating the configuration of an advertisement data providing apparatus according to an embodiment of the present general inventive concept;

FIG. 12 is a block diagram illustrating the configuration of an advertisement data providing server according to an embodiment of the present general inventive concept;

FIG. 13 is an exemplary diagram illustrating operations of a method of providing advertisement data according to an embodiment of the present general inventive concept;

FIG. 14 is an exemplary diagram illustrating operations of a method of providing advertisement data according to another embodiment of the present general inventive concept;

FIG. 15 is a flowchart illustrating operations of a method of providing advertisement data by using an advertisement data providing apparatus according to exemplary embodiments of the present general inventive concept; and

FIG. 16 is a flowchart illustrating operations of a method of selecting advertisement data by using an advertisement data selecting apparatus according to exemplary embodiments of the present general inventive concept.

### DETAILED DESCRIPTION OF THE EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

In addition, the specification and the drawing are not provided to limit the scope of the present general inventive concept, and the scope of the present general inventive concept is defined by the claims. The terminologies used herein are for the purpose of describing embodiments, and thus may be interpreted to correspond to the meaning and concept of the present general inventive concept. Therefore, various changes in form and details may be made to the present general inventive concept, and thus, the present general inventive concept should not be construed as being limited to the embodiments set forth herein. The present general inventive concept is not limited to the embodiments described in the present description, and thus it should be understood that the inventive concept does not include every kind of variation example or alternative equivalent included in the spirit and scope of the present general inventive concept. Expressions such as "at least one of," when preceding a list of elements, modify the entire list of elements and do not modify the individual elements of the list.

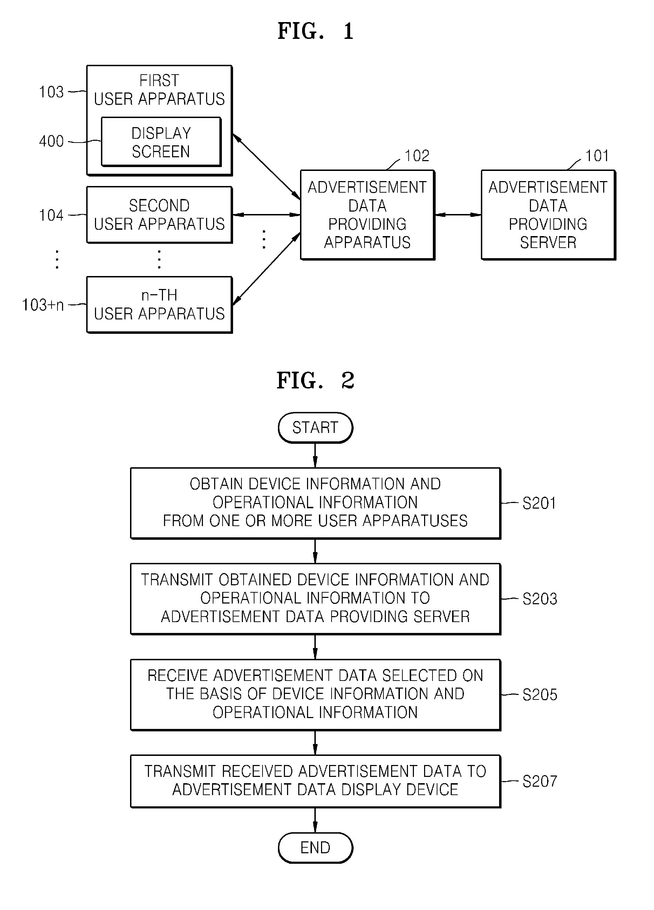

FIG. 1 is a block diagram of a system to provide advertisement data according to an embodiment of the present general inventive concept.

Referring to FIG. 1, the system to provide advertisement data may include first to n-th user apparatuses 103 to 103+n, an advertisement data providing user apparatus 102, and an advertisement data providing server 101.

One or more of the first to n-th user apparatuses 103 to 103+n may transmit respective device information and operational information to the advertisement data providing apparatus 102. For example, an advertisement data providing apparatus 102 may include a controller, a central processing unit (CPU), a processor, a computer, or the like, and may include a memory, a data storage device, and the like. The device information and the operational information of the user apparatuses may be used when the advertisement data providing server 101 selects advertisement data. For example, the advertisement data providing server 101 may include a server, a computer, a web server, and the like. In addition, the first to n-th user apparatuses 103 to 103+n may receive the selected advertisement data from the advertisement data providing user apparatus 102, and then display the advertisement data.

In the embodiment of the present general inventive concept, the first to n-th user apparatuses 103 to 103+n may refer to user apparatuses that may be used in daily living, for example, a computer, a mobile phone, a television (TV), a telephone, or a copy machine. The types of apparatuses are not limited thereto.

The device information of each of the first to n-th (n a positive integer) user apparatuses 103 to 103+n may include at least one from among information on a type of apparatus, information on a manufacture date, or a release date of the user apparatus, information on an additional user apparatus associated with the user apparatus, and information of a group to which the user apparatus belongs.

Here, the type of user apparatus may be classified into, for example, a TV, a refrigerator, a washing machine, a computer, a monitor, and the like.

The information on an additional user apparatus associated with the user apparatus may refer to information on an additional user apparatus associated based on the type of user apparatus. For example, the type of additional user apparatus associated with a user apparatus such as a computer may include a mouse, a keyboard, and a monitor.

The operational information of the user apparatus may include at least one from among a number of operations and a number of functional operations of the user apparatus.

The number of operations of the user apparatus may refer to a use frequency of the user apparatus or a use time of the user apparatus. The use frequency of the user apparatus may refer to a number of operations performed by the user apparatus after the user apparatus is turned on. The use time of the user apparatus may refer to a total use time of the user apparatus or amount of time that the user apparatus has been recently used within a predetermined period.

The advertisement data providing apparatus 102 may obtain device information and operational information of the first to n-th user apparatuses 103 to 103+n from the first to n-th user apparatuses 103 to 103+n, respectively. The advertisement data providing apparatus 102 may transmit the obtained device information and operational information to the advertisement data providing server 101, which is then received by the advertisement data providing server 101. The advertisement data providing apparatus 102 may then receive advertisement data selected by the advertisement data providing server 101 on the basis of the transmitted device information and operational information received by the advertisement data providing server 101. The advertisement data providing apparatus 102 may transmit the received advertisement data to an advertisement data display device, which may be one of the first to n-th user apparatuses 103 to 103+n, such as, for example, the first user apparatus 103having a display screen 400. Here, the first user apparatus 103 is a device having a display screen 400 on which advertisement data may be displayed.

In the embodiment of the present general inventive concept, the advertisement data providing apparatus 102 may be a gateway located in a home network, a computer, a controller, a CPU, a processor, a microprocessor, and the like, but the present general inventive concept is not limited thereto.

The advertisement data providing server 101 may select advertisement data based on the device information and operational information received from the advertisement data providing apparatus 102 and may transmit the selected advertisement data to the advertisement data providing apparatus 102. Here, the advertisement data providing server 101 may store information on a plurality of portions of advertisement data and may select the advertisement data to transmit based on the information on the plurality of portions of advertisement data. The advertisement data providing server may include a processor, a microprocessor, a CPU, and the like, and a memory such as a Hard Disk Drive (HDD), Solid State Drive (SDD), a semiconductor memory device, and other data storage devices.

Information on the advertisement data may be information that may be used to select the advertisement data. For example, the information on the advertisement data may include at least one from among information on a type of user apparatus involved in the advertisement data, information on a manufacture date or a release date of a user apparatus involved in the advertisement data, information on a user apparatus associated with a user apparatus involved in the advertisement data, and information on a specialized function of a user apparatus involved in the advertisement data.

According to exemplary embodiments of the present general inventive concept, the advertisement data providing server 101 may select advertisement data based on device information and operational information of user apparatuses belonging to the same group and may transmit the selected advertisement data to the advertisement data display device belonging to a group that is the same as the group to which the user apparatuses belong. Since an advertisement data providing system of the present general inventive concept may select advertisement data by classifying the user apparatuses according to users or areas and may provide the advertisement data to the advertisement data display devices of those classified user apparatuses, customized advertisement data may be provided.

Here, one or more user apparatuses may be grouped according to users or areas, and different advertisement data may be selected by the advertisement data providing server 101 according to groups to which the user apparatuses belong.

FIG. 2 is a flowchart illustrating operations of a method of providing advertisement data by using the advertisement data providing apparatus 110 according to an embodiment of the present general inventive concept.

Referring to FIG. 2, the advertisement data providing apparatus 110 may obtain device information and operational information of one or more user apparatuses from the one or more user apparatuses in operation S201. The obtained device information may include information on the type of each of the one or more user apparatuses, a group that each of the one or more user apparatuses belongs to, a manufacture date or a release date of each of the one or more user apparatuses, and the type of another user apparatus associated with each of the one or more user apparatuses. The obtained operational information may include a number of operations and a number of functional operations of a user apparatus.

The advertisement data providing apparatus 102 may transmit the obtained device information and operational information to the advertisement data providing server 101 in operation S203. The advertisement data providing apparatus 102 may then receive advertisement data selected by the advertisement data providing server 101 on the basis of the device information and operational information that were obtained and then transmitted to the advertisement data providing server 101 in operation S205. The advertisement data may be advertisement data selected according to groups to which user apparatuses belong. In addition, the advertisement data received from the advertisement data providing server 101 may be selected by the advertisement data providing server 101 depending on information on a type of user apparatus, a manufacture date or a release date of the user apparatus, and another user apparatus that is associated with the user apparatus and involved in the device information, and information on a number of operations and a number of functional operations of the user apparatus that are involved in the operational information.

The advertisement data providing apparatus 102 may transmit the received advertisement data to the advertisement data display device in operation S207. When the advertisement data is selected according to groups, the advertisement data providing apparatus 102 may transmit the selected advertisement data to the advertisement data display device belonging to the same group as the device information and operational information.

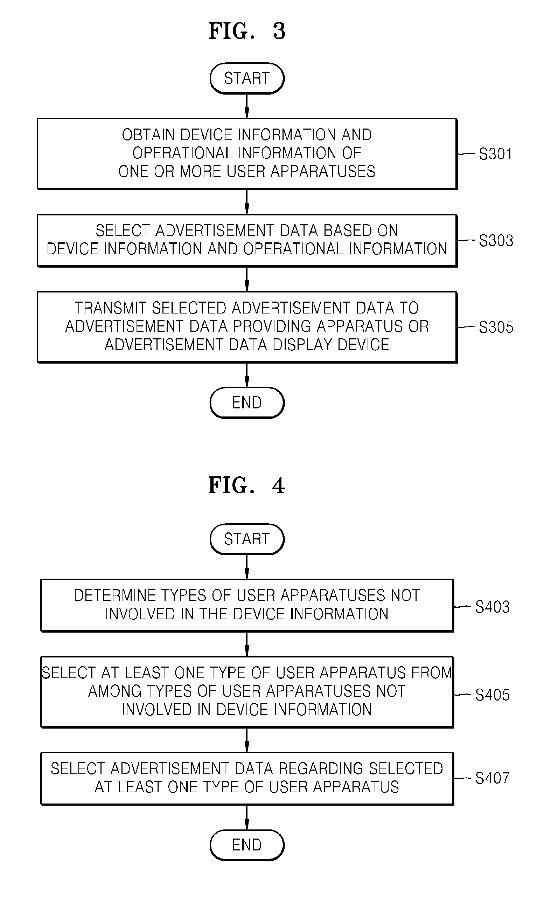

FIG. 3 is a flowchart illustrating a method of selecting and transmitting advertisement data by using the advertisement data providing server 101 according to an embodiment of the present general inventive concept.

Referring to FIG. 3, the advertisement data providing server 101 may obtain device information and operational information of one or more user apparatuses from the advertisement data providing apparatus 102 in operation S301. Alternatively, according to another embodiment of the present general inventive concept, the advertisement data providing server 101 may directly receive device information and operational information from one or more user apparatuses capable of generating their own device information and the operational information without requiring the device information and the operational information of the one or more user apparatuses to pass through the advertisement data providing apparatus 102.

The advertisement data providing server 101 may select advertisement data based on the device information and the operational information in operation S303 that it receives. For example, the advertisement data providing server 101 may select advertisement data to be provided to the advertisement data display device by using information on the advertisement data based on a type of user apparatus, a manufacture date or a release date of a user apparatus, whether a user apparatus associated with any one user apparatus involved in the device information is involved in the device information, and a number of operations and a number of functional operations of a user apparatus.

The advertisement data providing server 101 may transmit the selected advertisement data to the advertisement data providing apparatus 102 or the advertisement data display device in operation S305. If the advertisement data is transmitted to the advertisement data providing apparatus 102, the advertisement data received by the advertisement data providing apparatus 102 may be transmitted to the advertisement data display device.

A method of selecting advertisement data by the advertisement data providing server 101 will be described below in detail with reference to FIGS. 4 to 8. FIG. 4 is a flowchart illustrating operations of a first method of selecting advertisement data by using an advertisement data providing server according to an embodiment of the present general inventive concept.

Referring to FIG. 4, the advertisement data providing server 101 may select advertisement data based on a type of user apparatus not involved in the device information.

The advertisement data providing server 101 may determine types of user apparatuses not involved in the device information received from the advertisement data providing apparatus 102 in operation S403. In operation S405, the advertisement data providing server 101 may select at least one type of user apparatus from among the types of user apparatuses determined in operation S403. In operation S407, the advertisement data providing server 101 may select the advertisement data regarding the at least one type of user apparatus selected in operation S405.

For example, if the advertisement data providing server 101 determines that a computer, a TV, and a refrigerator are all involved in the device information and that a washing machine and a cleaner are not involved in the device information, the advertisement data providing server 101 may select the advertisement data regarding at least one from among the computer, the TV, and the refrigerator.

Therefore, according to an embodiment of the present general inventive concept, advertisement data regarding a user apparatus of the types not involved in the device information may be provided. For example, customized advertisement data may be provided regarding a type of user apparatus that is not owned by a user or a type of user apparatus that is not located in a predetermined area, thereby maximizing an advertising effect. The predetermined area may refer to an area inside a house or an office.

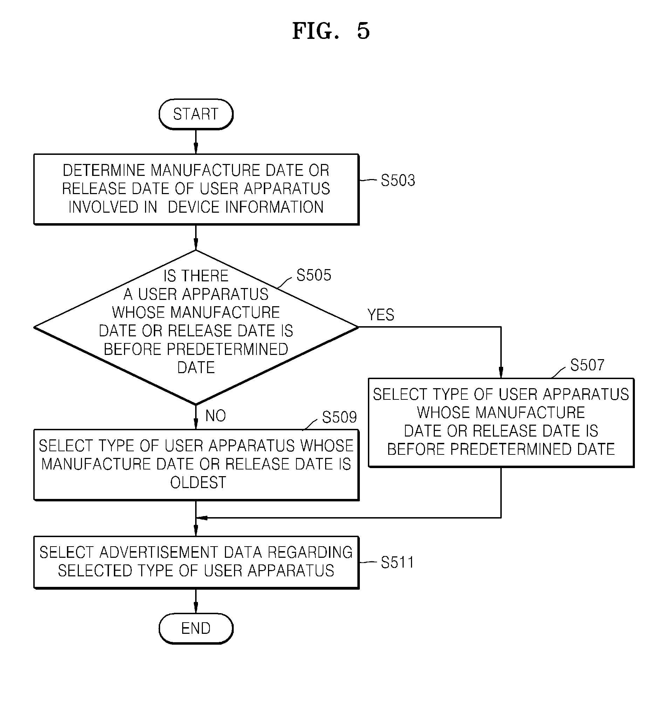

FIG. 5 is a flowchart illustrating operations of a second method of selecting advertisement data by using the advertisement data providing server 101, according to an embodiment of the present general inventive concept.

Referring to FIG. 5, the advertisement data providing server 101 may select advertisement data based on a manufacture date or a release date of a user apparatus involved in the device information.

The advertisement data providing server 101 may determine a manufacture date or a release date of a user apparatus involved in the device information in operation S503. The advertisement data providing server 101 determines whether there is a user apparatus whose manufacture date or release date is before a predetermined date in operation S505, and thus the advertisement data providing server 101 may select a type of user apparatus whose manufacture date or release date is before a predetermined date in operation S507 or select a type of apparatus whose manufacture date or release date is the oldest in operation S509. In operation S511, the advertisement data providing server 101 may select advertisement data regarding the type of user apparatus selected in operation S507 or operation S509. Here, if a user apparatus is the same type as the type of user apparatus selected in operation S507 or operation S509 and if its manufacture date or a release date is recent and not involved in the device information or does not belong to the same group as the type of user apparatus selected in operation S507 or operation S509, the advertisement data providing server 101 may select advertisement data regarding the type of user apparatus selected in operation S507 or operation S509.

For example, if the advertisement data providing server 101 determines that a computer, a TV, and a refrigerator are involved in the device information and that a manufacture date or a release date of the refrigerator is the oldest between the manufacture dates or the release dates of the computer, the TV, and the refrigerator, the advertisement data providing server 101 may select advertisement data regarding the refrigerator.

Therefore, according to an embodiment of the present general inventive concept, since the advertisement data providing server 101 may select and provide advertisement data with respect to a type of user apparatus that is involved in the device information and that has a manufacture date or a release date that is relatively the oldest in comparison with other types of user apparatuses that are involved in the device information, customized advertisement data may be provided to users, thereby maximizing advertising effectiveness.

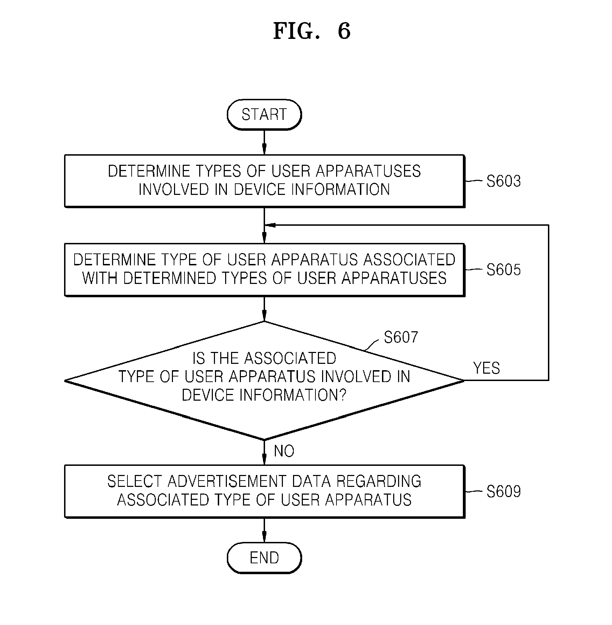

FIG. 6 is a flowchart illustrating operations of a third method of selecting advertisement data by using the advertisement data providing server 101 according to an embodiment of the present general inventive concept.

Referring to FIG. 6, the advertisement data providing server 101 may determine types of user apparatuses involved in device information in operation S603. In operation S605, the data providing server 101 may determine at least one type of user apparatus that is associated with the types of user apparatuses determined in operation S603. The advertisement data providing server 101 determines whether the at least one associated type of user apparatus determined in operation S605 is a type of user apparatus involved in the device information in operation S607. If it is determined that the at least one associated type of user apparatus determined in operation S605 is not one of the types of user apparatuses involved in the device information, the advertisement data providing server 101 may select advertisement data regarding the at least one associated type of user apparatus in operation S609.

For example, if the advertisement data providing server 101 determines that a computer, a TV, and a refrigerator are involved in device information and that a home theater associated with the TV is not involved in the device information, the advertisement data providing server 101 may select advertisement data regarding the home theater.

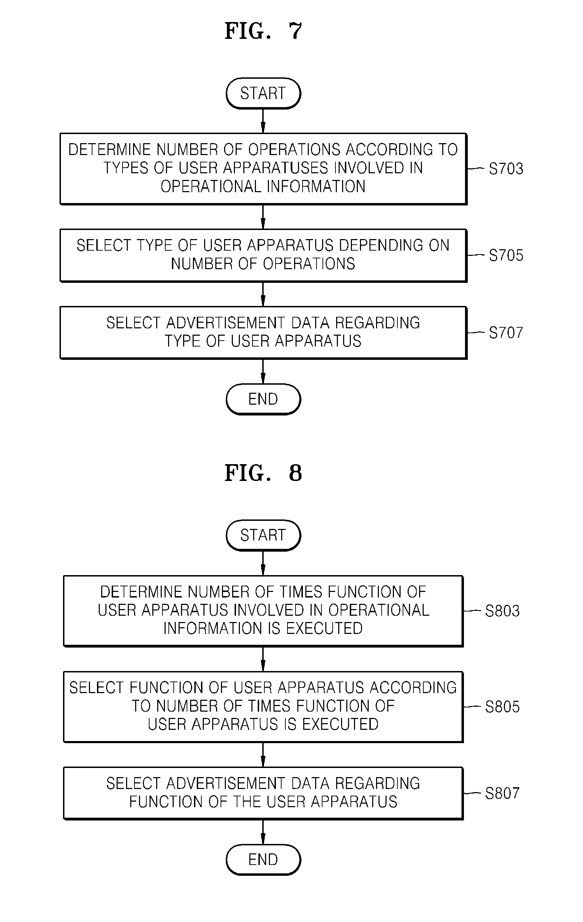

FIG. 7 is a flowchart illustrating operations of a fourth method of selecting advertisement data by the advertisement data providing server 101 according to an embodiment of the present general inventive concept.

Referring to FIG. 7, the advertisement data providing server 101 may determine a number of operations according to the types of user apparatuses involved in operational information in operation S703. The advertisement data providing server 101 may select a type of user apparatus depending on the number of operations performed by each of the types of user apparatuses in operation S705. For example, the advertisement data providing server 101 may select a type of user apparatus that has a number of operations that is equal to or greater than a predetermined number of operations. The advertisement data providing server 101 may also select a type of user apparatus that has the highest number of operations amongst the number of operations of all of the types of user apparatuses. In operation S707, the advertisement data providing server 101 may select advertisement data regarding the type of user apparatus selected in operation S705.

For example, if the advertisement data providing server 101 determines that a computer, a TV, and a refrigerator are involved in device information and that a number of operations of the refrigerator is the highest, the advertisement data providing server 101 may select advertisement data regarding the refrigerator.

According to an embodiment of the present general inventive concept, since advertisement data may be provided with respect to the type of user apparatus that is frequently used, customized advertisement data may be provided, thereby maximizing an advertising effect.

FIG. 8 is a flowchart illustrating operations of a fifth method of selecting advertisement data by the advertisement data providing server 101 according to an embodiment of the present general inventive concept.

Referring to FIG. 8, the advertisement data providing server 101 may determine a number of times a function of a user apparatus involved in operational information is executed in operation S803. The advertisement data providing server 101 may select a function of a user apparatus according to the number of times a function of the user apparatus is executed in operation S805. For example, the advertisement data providing server 101 may select a function of a user apparatus if the number of times that the function of the user apparatus is executed is equal to or greater than a predetermined number of times. Additionally, the advertisement data providing server 101 may select a function of a user apparatus if the number of times that the function of the user apparatus is executed is the highest amongst the number of times that the functions of all other types of user apparatuses are executed.

In operation S807, advertisement data providing server 101 may select advertisement data regarding the function of the user apparatus selected in operation S805.

For example, if the advertisement data providing server 101 determines that a computer, a TV, and an air conditioner with a specialized dehumidification function are involved in device information and that the dehumidification function of the air conditioner is frequently used, the advertisement data providing server 101 may select advertisement data regarding the air conditioner with the specialized dehumidification function.

The advertisement data providing server 101 may select advertisement data regarding a user apparatus with a specialized function by selecting advertisement data regarding a plurality of functions executed by various types of user apparatuses or by selecting the type of user apparatus to provide advertisement data about and then selecting a frequently executed function from among functions of the selected type of user apparatus.

According to an embodiment of the present general inventive concept, since advertisement data may be provided with respect to a frequently executed function of a user apparatus, customized advertisement data may be provided, thereby maximizing advertising effectiveness.

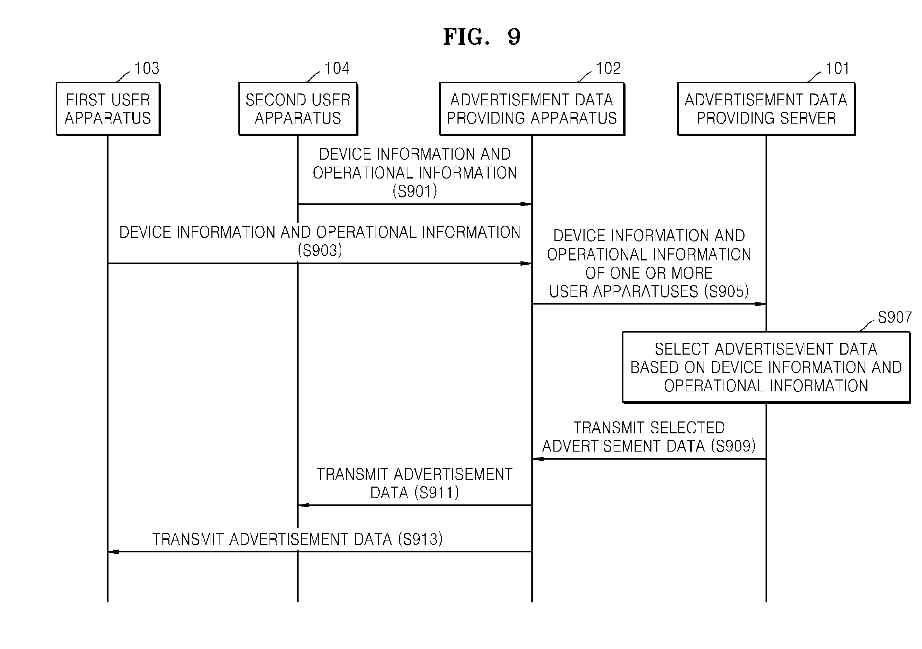

FIG. 9 is a flowchart illustrating operations of a method of selecting and providing advertisement data according to an embodiment of the present general inventive concept.

According to an embodiment of the present invention, the advertisement data providing server 101 may transmit the selected advertisement data to the advertisement data providing apparatus 102 so that the advertisement data providing apparatus 102 may transmit the advertisement data to a device to display the advertisement data.

Referring to FIG. 9, the advertisement data providing apparatus 102 may receive device information and operational information regarding the first user apparatus 103 and the second user apparatus 104 from the first user apparatus 103 and the second user apparatus 104, respectively, in operation S901 and operation S903. The advertisement data providing apparatus 102 may transmit the received device information and operational information of one or more user apparatuses to the advertisement data providing server 101 in operation S905. The advertisement data providing server 101 may select advertisement data based on the device information and operational information transmitted to it (operation S907). The advertisement data providing server 101 may transmit the selected advertisement data to the advertisement data providing apparatus 102 in operation S909, and the advertisement data providing apparatus 102 may transmit the received advertisement data to the first user apparatus 103 or the second user apparatus 104 in operation S911 and operation S913. Alternatively, the advertisement data providing apparatus 102 may transmit the advertisement data to an advertisement data display device, such as the first user apparatus 103.

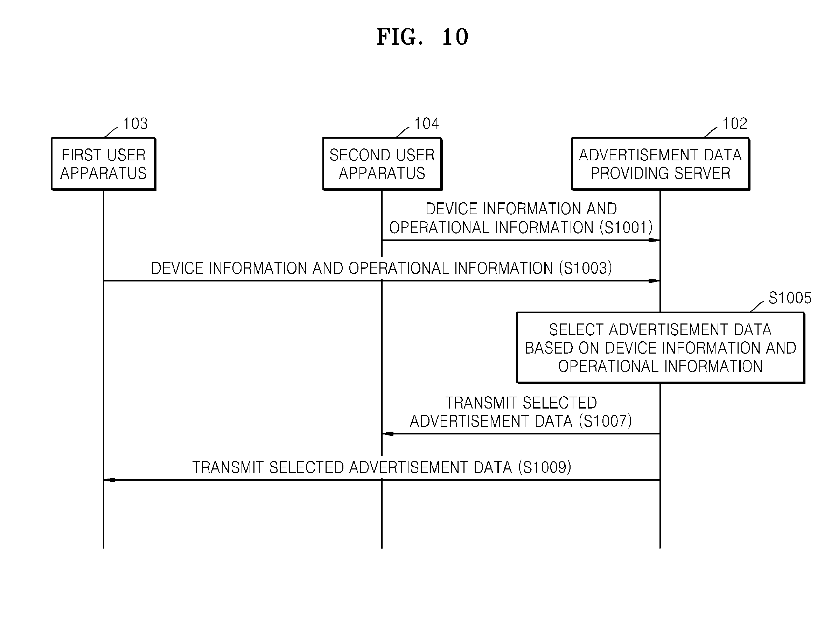

FIG. 10 is a flowchart illustrating operations of a method of selecting and providing advertisement data according to another embodiment of the present general inventive concept.

According to another embodiment of the present general inventive concept, the advertisement data providing server 101 may obtain device information and operational information without using the advertisement data providing apparatus 102 and may transmit advertisement data to an advertisement data display device.

Referring to FIG. 10, the advertisement data providing server 101 may receive device information and operational information of the first user apparatus 103 and the second user apparatus 104 from the first user apparatus 103 and the second user apparatus 104, respectively, in operation S1001 and operation S1003. The advertisement data providing server 101 may select advertisement data based on the received device information and operational information in operation S1005. The advertisement data providing server 101 may transmit the selected advertisement data to the first user apparatus 103 or the second user apparatus 104 in operation S1007 and operation S1009. Alternatively, the advertisement data providing apparatus 102 may transmit the selected advertisement data to an advertisement data display device such as, for example, the first user apparatus 103.

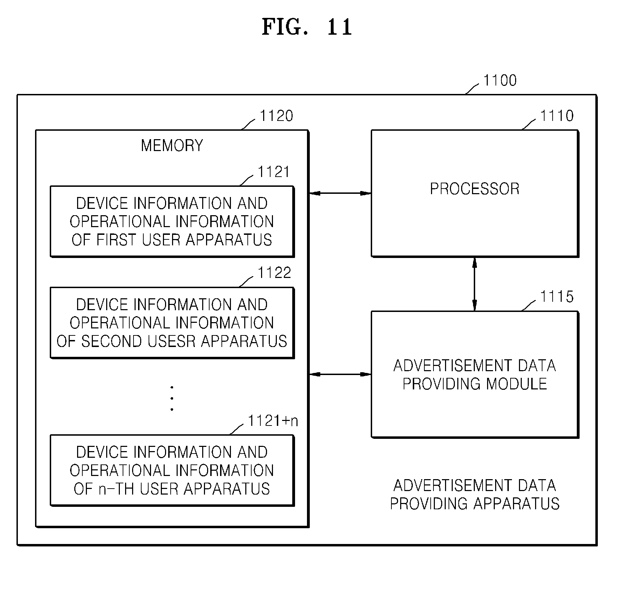

FIG. 11 is a block diagram illustrating the configuration of an advertisement data providing apparatus 1100 according to an embodiment of the present general inventive concept. The advertisement data providing apparatus 1100 may be provided in the system in FIG.1, with the advertisement data providing apparatus 1100 being substituted for the advertisement data providing apparatus 102.

The advertisement data providing apparatus 1100 may include a memory 1120 to store a program to provide device information, operational information, and advertisement data, and a processor 1110 to execute the program to provide advertisement data.

The memory 1120 may store a plurality of pieces of device information and operational information 1121 to 1121+n that are respectively received from the first to n-th user apparatuses 103 to 103+n. Memory 1120 may include a semiconductor memory, a Hard Disk Drive (HDD), a Solid State Drive (SDD), and the like.

The processor 1110, which may be a CPU, programmable logic device, integrated circuit, field programmable gate array and the like, may execute programs stored in the memory 1120 to provide the programs to a device capable of displaying the advertisement data. The programs stored in the memory 1120 may include an advertisement data providing module 1115.

The advertisement data providing module 1115 may obtain device information and operational information of a user apparatus, may transmit the obtained device information and operational information to an advertisement data providing server, may receive advertisement data from the advertisement data providing server that is selected by the advertisement data providing server on the basis of the device information and the operational information, and may transmit the received advertisement data to a device capable of displaying the advertisement data. For example, the advertisement data providing module 1115 may be a controller, a computer, a CPU, a microprocessor, software, a combination of hardware and software, or the like.

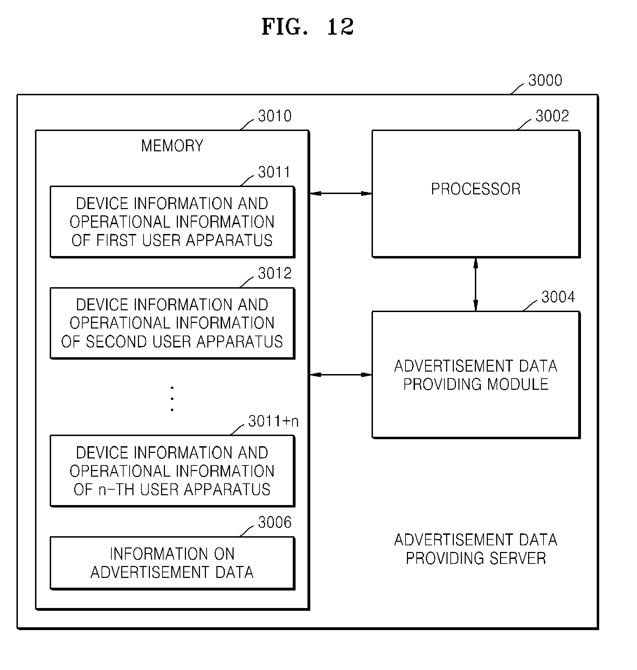

FIG. 12 is a block diagram illustrating the configuration of an advertisement data providing server 3000 according to an embodiment of the present invention. The advertisement data providing server 3000 may be provided in the system in FIG.1, with the advertisement data providing server 3000 being substituted for the advertisement data providing server 101.

The advertisement data providing server 3000 may include a memory 3010 to store information on advertisement data, device information, operational information, and a program to select advertisement data, and a processor 3002 to execute the program to select advertisement data.

The memory 3010 may store a plurality of pieces of device information and operational information 3011 to 3011+n of the respective first to n-th user apparatuses 103 to 103+n, wherein the plurality of pieces of device information and operational information 3011 to 3011+n are received from the advertisement data providing apparatus 1100. According to another embodiment of the present general inventive concept, the device information and the operational information of the memory 3010 may be directly received from the first to n-th user apparatuses 103 to 103+n by the advertisement data providing server 3000. In addition, the memory 3010 may store information 3006 regarding advertisement data for selecting the advertisement data. The information 3006 regarding advertisement data may include advertisement data to be provided to an advertisement data display device and information on advertisement data. The information on the advertisement data may include information representing a type of user apparatus that the advertisement data is associated with or a specialized function of the type of user apparatus of the advertisement data. Memory 3010 may include a semiconductor memory, a Hard Disk Drive (HDD), a Solid State Drive (SDD), and the like.

The processor 3002 may execute programs stored in the memory 3010 to provide advertisement data to a device capable of displaying the advertisement data. The programs stored in the memory 3010 may include an advertisement data selection module 3004. For example, the processor 3002 may also be implemented as a CPU, a microprocessor, or the like.

The advertisement data selection module 3004 may obtain device information and operational information of one or more user apparatuses, may select advertisement data based on the obtained device information and operational information, and may transmit the selected advertisement data to an advertisement data providing apparatus or an advertisement data display device. The advertisement data selection module 3004 may be a controller, a computer, a CPU, a microprocessor, software, a combination of hardware and software, or the like.

In detail, the advertisement data selection module 3004 may select advertisement data based on the type of user apparatus in the device information, may select advertisement data based on a manufacture date or a release date of the user apparatus, may select advertisement data based on the type of user apparatus associated with the type of user apparatus in the device information, or may select advertisement data based on a number of operations performed by the user apparatus as indicated in the operational information or a number of times a function is executed by the user apparatus.

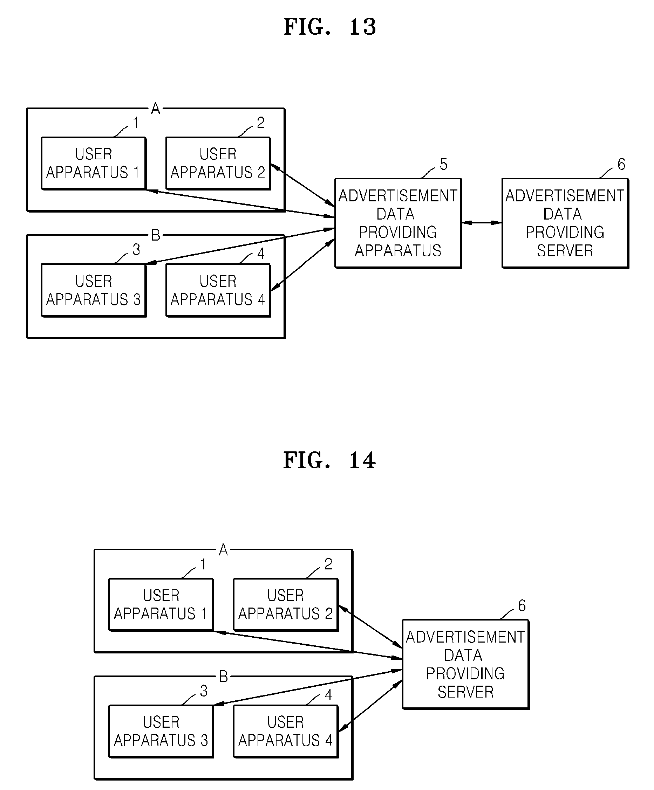

FIG. 13 is an exemplary diagram illustrating operations of a method of providing advertisement data according to an embodiment of the present general inventive concept.

Referring to FIG. 13, a user apparatus 1(reference numeral 1) and a user apparatus 2 (reference numeral 2) belong to a group A, and a user apparatus 3 (reference numeral 3) and a user apparatus 4 (reference numeral 4) belong to a group B. An advertisement data providing apparatus 5 may obtain device information and operational information from the user apparatus 1, the user apparatus 2, the user apparatus 3, and the user apparatus 4, and transmit the obtained device information and operational information to an advertisement data providing server 6. According to an embodiment of the present general inventive concept, the advertisement data providing server 6 may select advertisement data according to groups and provide the selected advertisement data.

For example, the advertisement data providing server 6 may select advertisement data to be provided to the group A by using the device information and the operational information of the user apparatus 1, and the user apparatus 2, that belong to the group A and may select advertisement data to be provided to the group B by using the device information and the operational information of the user apparatus 3, and the user apparatus 4, that belong to the group B. The advertisement data providing apparatus 5 may then be provided, from the advertisement data providing server 6, the advertisement data selected according to groups. Having received the advertisement data from the advertisement data providing server 6, the advertisement data providing apparatus 5 may transmit the advertisement data to a device capable of displaying an advertisement corresponding to each group. In other words, the advertisement data providing apparatus 5 may transmit advertisement data regarding the group A to the user apparatus 1, the user apparatus 2 or a device capable of displaying advertisement data corresponding to the group A. In addition, the advertisement data providing apparatus 5 may transmit advertisement data regarding the group B to the user apparatus 3, the user apparatus 4, or a device capable of displaying advertisement data corresponding to the group B.

FIG. 14 is an exemplary diagram illustrating operations of a method of providing advertisement data according to another embodiment of the present general inventive concept.

Referring to FIG. 14, the user apparatus 1, and the user apparatus 2, belong to the group A, and the user apparatus 3, and the user apparatus 4, belong to the group B. According to another embodiment of the present general inventive concept, the advertisement data providing server 6 may obtain device information and operational information from the user apparatus 1, the user apparatus 2, the user apparatus 3, and the user apparatus 4, and select advertisement data.

The advertisement data providing server 6 may select advertisement data as described above with reference to FIG. 13.

The advertisement data providing server 6 may transmit advertisement data selected according to groups to a device capable of displaying an advertisement corresponding to each group. In other words, the advertisement data providing server 6 may transmit advertisement data regarding the group A to the user apparatus 1, the user apparatus 2, or a device capable of displaying advertisement data corresponding to the group A. In addition, the advertisement data providing server 6 may transmit the advertisement data regarding the group B to the user apparatus 3, the user apparatus 4, or a device capable of displaying advertisement data corresponding to the group B.

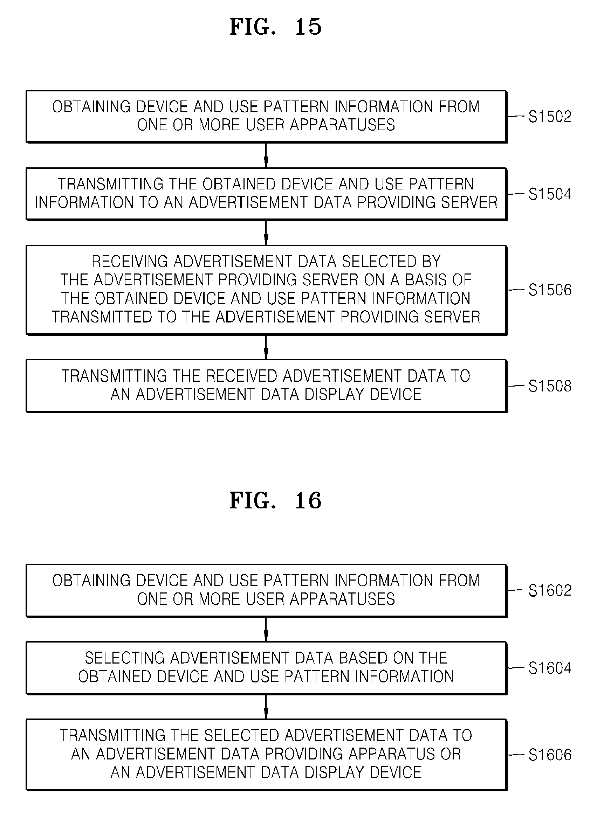

As illustrated in FIG. 15, exemplary embodiments of the present general inventive concept may also provide a method of providing advertisement data by using an advertisement data providing apparatus. The method includes obtaining device and use pattern (operational) information from one or more user apparatuses at operation S1502, transmitting the obtained device and use pattern information to an advertisement data providing server at operation S1504, receiving advertisement data selected by the advertisement providing server on a basis of the obtained device and use pattern information transmitted to the advertisement providing server at operation S1506, and transmitting the received advertisement data to an advertisement data display device at operation S1508. Device information may include, for example, a manufacture date, a release date, and a type of device, such as a TV, a computer, a refrigerator, and the like. Use pattern information may include, for example, a use frequency, a time of use, a total time of use, and the like. The transmitted display and use pattern information transmitted to a user apparatus may be displayed on a display screen of the user apparatus.

That is, the use pattern information may include at least one of a use frequency of a user apparatus of the one or more user apparatuses and a use time of the user apparatus. Thus, customized device and use pattern advertisement data may be provided to a user.

In particular, for example, as illustrated in FIG. 1, the advertisement data providing apparatus 102 may obtain a type of the first user apparatus, determine other related types of user apparatuses and use pattern information related thereto, and transmit same to the first user apparatus. Alternatively, for example, the advertisement data providing apparatus 102 may obtain a type of the first user apparatus, determine other un related types of user apparatuses and use pattern information related thereto, and transmit same to the first user apparatus. Hence, the first user apparatus may display the received information on the display screen 400 and determine a customized use of the received advertisement data information.

As illustrated in FIG. 16, exemplary embodiments of the present general inventive concept may also provide a method of selecting advertisement data by using an advertisement data selecting apparatus. The method may include obtaining device and use pattern (operational) information from one or more user apparatuses at operation S1602, selecting advertisement data based on the obtained device and use pattern information at operation S1604, and transmitting the selected advertisement data to an advertisement data providing apparatus or an advertisement data display device at operation S1606. Device information may include, for example, a manufacture data, a release date, and a type of device, such as a TV, a computer, a refrigerator and the like. Use pattern information may include, for example, a use frequency, a time of use, a total time of use, and the like.

The use pattern information may include at least one of a use frequency of a user apparatus of the one or more user apparatuses and a use time of the user apparatus.

The advertisement data providing server 101 enables networking with more than one advertisement data providing apparatus 102, thus expanding an amount of received advertisement data information so as to provide customized advertisement data information of, for example, entire geographical regions.

The invention can be also embodied as computer readable codes on a computer readable recording medium. The computer readable recording medium is any data storage device that can store data that can be thereafter be read by a computer system. Examples of the computer readable recording medium include read-only memory (ROM), random-access memory (RAM), CD_ROMs, magnetic tapes, floppy disks, optical data storage devices, etc. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A method of providing advertisement data by using an advertisement data providing apparatus, the method comprising:
obtaining device information and operational information from one or more user apparatuses;
transmitting the obtained device information and the obtained operational information to an advertisement data providing server;
receiving advertisement data selected by the advertisement providing server on a basis of the obtained device information and the obtained operational information transmitted to the advertisement providing server; and
transmitting the received advertisement data to an advertisement data display device,
wherein the obtained operational information is information on a use pattern of the one or more user apparatuses.

2. The method of claim 1, wherein
the obtained device information comprises information on a type of a user apparatus of the one or more user apparatuses, and
the received advertisement data comprises advertisement data regarding, of the one or more user apparatuses, a user apparatus that is of a type not involved in the obtained device information and selected based on information on the type of the user apparatus.

3. The method of claim 1, wherein
the obtained device information comprises information on a manufacture date or a release date of the one or more user apparatuses, and
the receiving of the advertisement data comprises receiving advertisement data selected by the advertisement providing server based on the information on the manufacture date or the release date of the one or more user apparatuses.

4. A method of selecting advertisement data by using an advertisement data selecting apparatus, the method comprising:
obtaining device information and operational information from one or more user apparatuses;
selecting advertisement data based on the obtained device information and the obtained operational information; and
transmitting the selected advertisement data to an advertisement data providing apparatus or an advertisement data display device,
wherein the operational information is information on a use pattern of the one or more user apparatuses.

5. The method of claim 4, wherein the obtained device information comprises information on a type of a user apparatus of the one or more user apparatuses, and the selecting of the advertisement data comprises selecting advertisement data regarding, of the one or more user apparatuses, a user apparatus that is of a type not involved in the obtained device information based on the information on the type of the user apparatus.

6. The method of claim 4, wherein the obtained device information comprises information on a manufacture date or a release date of the one or more user apparatuses, and the selecting of the advertisement data comprises selecting advertisement data based on the information on a manufacture date or a release date of the one or more user apparatuses.

7. An advertisement data providing apparatus comprising:
a memory to store device information and operational information obtained from one or more user apparatuses; and
a processor to obtain device information and operational information of the one or more user apparatuses, to transmit the obtained device information and the obtained operational information to an advertisement providing server, to receive advertisement data selected by the advertisement providing server on a basis of the obtained device information and the obtained operational information transmitted to the advertisement providing server, and to transmit the received advertisement data to an advertisement data display device,
wherein the obtained operational information is information on a use pattern of the one or more user apparatuses.

8. The advertisement data providing apparatus of claim 7, wherein the obtained device information comprises information on a type of user apparatus, and the received advertisement data comprises advertisement data regarding, of the one or more user apparatuses, a user apparatus that is of a type not involved in the obtained device information and selected based on information on the type of user apparatus.

9. The advertisement data providing apparatus of claim 7, wherein the obtained device information comprises information on a manufacture date or a release date of the one or more user apparatuses, and the processor receives advertisement data selected by the advertisement providing server based on the information on the manufacture date or the release date of the one or more user apparatuses.

10. An advertisement data providing server comprising:
a memory to store device information and operational information obtained from one or more user apparatuses and one or more pieces of advertisement data; and
a processor to obtain device information and operational information of the one or more user apparatuses, to select advertisement data based on the obtained device information and the obtained operational information, and to transmit the selected advertisement data to an advertisement data providing apparatus or an advertisement data display device,
wherein the obtained operational information is information on a use pattern of the one or more user apparatuses.

11. The advertisement data providing server of claim 10, wherein the obtained device information comprises information on a manufacture date or a release date of the one or more user apparatuses, and the processor selects the one or more pieces of advertisement data based on the information on the manufacture date or the release date of the one or more user apparatuses.

12. A method of providing advertisement data by using an advertisement data providing apparatus, the method comprising:
obtaining device and use pattern information from one or more user apparatuses;
transmitting the obtained device and use pattern information to an advertisement data providing server;
receiving advertisement data selected by the advertisement providing server on a basis of the obtained device and use pattern information transmitted to the advertisement providing server; and
transmitting the received advertisement data to an advertisement data display device.

13. The method of claim 12, wherein use pattern information includes at least one of a use frequency of a user apparatus of the one or more user apparatuses and a use time of the user apparatus.

14. A method of selecting advertisement data by using an advertisement data selecting apparatus, the method comprising:
obtaining device and use pattern information from one or more user apparatuses;
selecting advertisement data based on the obtained device and use pattern information;
and
transmitting the selected advertisement data to an advertisement data providing apparatus or an advertisement data display device.

15. The method of claim 14, wherein use pattern information includes at least one of a use frequency of a user apparatus of the one or more user apparatuses and a use time of the user apparatus.
